# EUROPEAN PATENT SPECIFICATION

(11) **EP 1 749 865 B1**
(45) Date of publication and mention of the grant of the patent: **24.07.2013**
(21) Application number: 06015788.0
(22) Date of filing: 28.07.2006
(51) Int. Cl.: C09D 171/00

(54) **Use of fluorinated compounds for the protective treatment of titanium surfaces**
Verwendung von fluorinierten Verbindungen zur Schutzbehandlung von Titaniumsubstraten
Utilisatiom de composés fluorés pour la protection de surfaces à base de titanium

(30) Priority: 04.08.2005 IT MI20051533
(43) Date of publication of application: 07.02.2007
(73) Proprietor: Solvay Specialty Polymers Italy S.p.A., 20021 Bollate (MI) (IT)
(72) Inventor: D'Aprile, Fiorenza, 20054 Nova Milanese Milano (IT); Di Gregorio, Cristina, 20141 Milano (IT)
(74) Representative: Benvenuti, Federica

(56) References cited:
- EP-A- 0 687 533
- EP-A- 1 231 297
- EP-A1- 0 059 100
- EP-A1- 0 603 697
- EP-A1- 1 225 178
- EP-A2- 1 074 243
- US-A- 3 492 374
- US-A- 5 874 169
- DATABASE CHEMABS CHEMICAL ABSTRACTS SERVICE, COLUMBUS, OHIO, US; 1984, SEDENKOV, A.M. ET AL.: "Adsorption of phosphoric acid anions on a highly oxidized titanium surface" XP002410499 & ZHURNAL FIZICHESKOI KHIMII, vol. 56, no. 11, 1982, pages 2893-2895,

## Description

The present invention relates to the use of compositions based on fluorinated compounds for the protective treatment of titanium surface to confer no dirt-pick up properties.

More specifically the present invention relates to the use of water perfluoropolyether phosphate compositions for the surface protective treatment of titanium or titanium coated manufactured articles, to confer to titanium surfaces no dirt-pick up properties, preferably in combination with an improved dirt removal without leaving residual halos.

Titanium is a very appreciated metal for its resistance to corrosion, for its lightness and biocompatibility, therefore it is used, alternatively to aluminum, in the preparation of manufactured articles or coatings in various fields as, for example, in architecture, furnishings, wall coatings or floorings, in food field, for example in the pots and pans production.

However titanium surfaces show big dirtiness problems, in particular an easiness to pick-up dirt and form hardly removable stains when the surface comes into contact with foods containing fats or oils, with fingerprints or with water. This problem is particularly felt in the furnishing field and in the pots and pans production, as the dirt or the stains present on titanium surfaces are not removed either by cloth wet with water or by cleaning products usually used on other metals, for example stainless steel and copper. On the contrary the use of water, alcohol or common detergents implies the further formation of stains and/or halos on titanium surfaces. See the comparative Examples.

Silanes and perfluoropolyether phosphates capable to avoid limestone deposits on metal surfaces, in particular copper, are known in the prior art, also conferring hydrorepellent and anticorrosive properties to said surfaces. See for example patent application US 2002/0146576 A1. However tests carried out by the Applicant using the compounds exemplified in the aforesaid patent on titanium surfaces have shown that antilimestone properties do not imply also no dirt pick-up properties, in particular of dirt having an oily base as, for example, residues of cooked food.

EP 1 074 243 discloses compositions for cosmetic use comprising A) a perfluoropolyether phosphates, salified, partially salified and non salified;
B) a solvent selected from alcohol, glycols, monoalkyl ethers and dimethoxymethane acetone.
c) water

EP 687 533 discloses the use of perfluropolyether phosphoric monoester, fully salified or in acid form to confer hydro/oleorepellency to various substrates, for example metallic surfaces.

EP 59 100 discloses the use of unfunctionalized perfluropolyethers (oils) for protecting marble, stones, tiles, from pollutants.

EP 1 231 297 discloses the use of perfluoropolyether phosphoric monoester, fully salified or in acid form to confer anticalcar properties to metal substrates.

The need was felt to have available compositions having the following combinations of properties:
- capability to conferring to metal titanium surfaces a high no dirt pick-up properties, in particular towards oils;
- capability of easier removing stains without having residual halos;
- no modification of the titanium surface appearance;
- ability of conferring said properties forlong time and high resistance, for example to heat and/or light.

It has been surprisingly and unexpectedly found that it is possible to solve the above technical problem by using particular compositions as indicated below.

An object of the present invention is the use, for the protective treatment of titanium surfaces, for conferring no dirt-pick up properties, of perfluoropolyethers of formula:
(A) T-O- [R_{f},-CFY-L-O]P(O)(O⁻Z⁺)₂₋ₘ(OH)ₘ;
(B) (OH)ₘ(O⁻Z⁺)₂₋ₘP(O)[O-L-YFC-O-R_{f}-CFY-L-O-P(O)(O⁻Z⁺)]_{m'}-- [O-L-YFC-O-R_{f}-CFY-L-O]P(O)(O⁻Z⁺)₂₋ₘ(OH)ₘ;
or of their mixtures,
wherein:
- m' is an integer from 0 to 20, preferably from 0 to 4;
- L is an organic group selected from -CH₂-(OCH₂CH₂)ₙ-, -CO-NR'-(CH₂)_{q}-, with R'= H or C₁-C₄ alkyl; n is a number from 0 to 8, preferably from 1 to 3, q is a number from 1 to 8, preferably from 1 to 3;
- Z⁺= alkaline metal ion or an aliphatic amine ion or a NR₄ group wherein R is selected from H, C₁-C₄ alkyl, C₁-C₄ hydroxyalkyl;
- Y = F, CF₃;
- m is a number between 0 and 2, extremes excluded, preferably between 0.5 and 1.5;
- T is a (per)fluoroalkyl group selected from -CF₃, -C₂F₅, -C₃F₇, -CF₂Cl, -C₂F₄Cl, -C₃F₆Cl, optionally one or two F atoms can be substituted with one or two H atoms, preferably one;
and wherein R_{f}, R_{f'} is selected from:
- a C₁-C₂₀, preferably C₂-C₆, (per) fluoroalkylene chain, optionally containing one or more ether, thioether, sulphonamido (SO₂NH), amido (CONH), amino (NH) bonds, preferably thioether bonds;
- a (per)fluoropolyoxyalkylene chain having a number average molecular weight in the range 350-8,000, preferably 500-3,000, formed of one or more of the following repeating units, statistically distributed along the chain:
   (CFXO), (CF₂CF₂O), (CF₂CF₂CF₂O), (CF₂CF₂CF₂CF₂O), (CR₄R₅CF₂CF₂O), (CF(CF₃)CF₂O), (CF₂CF(CF₃)O),
   wherein
   X = F, CF₃;
   R₄ and R₅, equal to or different from each other, are selected from H, Cl, or perfluoroalkyl from 1 to 4 carbon atoms.

Preferably R_{f}, R_{f'} are one of the following perfluorooxy-alkylene chains:
1) -(CF₂O)_{a'}-(CF₂CF₂O)_{b'}-
   with a'/b' between 0.5 and 2, extremes included (b' being different from 0), a' and b' being integers such as to give the above molecular weight;
2) -(C₃F₆O)ᵣ-(C₂F₄O)_{b}-(CFXO)ₜ-
   with r/b = 0.5-2.0 (b being different from 0); (r+b)/t is in the range 10-30 (t being different from 0), b, r and t being integers such as to give the above molecular weight, X has the above meaning;
3) -(C₃F₆O)_{r'}-(CFXO)_{t'}-
   t' can be 0;
   when t' is different from 0 then r'/t' = 10-30,
   r' and t' being integers such as to give the above molecular weight; X has the above meaning;
4) -(OCF₂CF(CF₃))_{z}-OCF₂(R'f)_{y}-CF₂O-(CF(CF₃)CF₂O)_{z}-
   wherein y is 0 or 1, R'f is a fluoroalkylene group, preferably from 1 to 4 carbon atoms and z is an integer such that the molecular weight is the above one;
5) -(OCF₂CF₂CR₄R₅)_{q}-OCF₂(R' f)_{y}-CF₂O- (CR₄R₅CF₂CF₂O)ₛ- wherein:
   R₄, R₅, R'f, y have the above meaning; q and s are integers such that the molecular weight is that above;
6) -(C₃F₆O)_{r"}(CFXO)_{t"}-OCF₂(R'f)_{y}-CF₂O(CF(CF₃)CF₂O)_{r"}(CFXO)_{t"}- wherein r"/t"= 10-30 (t" being different from 0), r" and t" being integers such as to give the above molecular weight; R'f and y having the above meaning.

Preferably R_{f'} in formula (A) is selected from 2) and 3) :
Compounds (A) and (B) are used in water and/or solvent compositions, preferably water compositions. These compositions preferably contain (A) and/or (B) up to a content of 35% by weight, preferably 30%. At these concentrations, the compositions show a very high stability.

Preferably the compositions of the invention comprise from 0.05% by weight to 10% by weight, more preferably from 0.1% by weight to 6% by weight of (A) and/or (B).

The solvents usable are, for example, polar solvents, for example glycols or C₁-C₄ alcohols, preferably methanol, ethanol, isopropanol, more preferably isopropanol; fluorinated solvents for example perfluoropolyethers, hydrofluoropolyethers, perfluorocarbons or hydrocarbon solvents.

The compositions of the invention are prepared by mixing compounds (A) and (B) with water and/or solvent in the desired amounts.

The protective treatment, for conferring no dirt-pick up properties and/or an improved dirt and/or stain removal, is carried out by applying the compositions of the invention by known techniques such as dipping, spraying or spreading to the titanium surfaces, smooth or sandblasted; then evaporating water and/or solvent.

Water compositions of compound (B), more preferably of compound (B) having m between 0.5 and 1.5, are preferably used.

The monofunctional and bifunctional (per)fluoropolyoxyalkylenes (A) and (B) can be prepared, for example, starting from the corresponding OH terminated (per)fluoropolyoxyalkylenes of formula:
(A') T-O-R_{f}, -CFY-L-OH,
(B') HO-L-YFC-O-R_{f}-CFY-L-OH,
according to the following process.

The monofunctional phosphates of structure (A) are prepared by reacting the corresponding (per)fluoroalkylenoxides hydroxy-ended (A') with POCl₃. To obtain compound (A) it is necessary to use a molar ratio POCl₃/-hydroxy-ended compound between 2/1 and 10/1, preferably between 6/1 and 8/1. The reaction is carried out by slowly dripping the hydroxy-ended compound in POCl₃, at a temperature in the range 50°C-100°C, preferably 70°C-80°C, by eliminating the HCl vapours in a KOH trap. The POCl₃ excess is removed by distillation while the formed adduct is hydrolyzed by H₂O. The separation of the obtained product takes place by extraction with a suitable organic solvent as, for example, ethyl acetate. From the organic phase the product of structure (A) is separated according to known techniques, for example by evaporation of the solvent.

The preparation of the bifunctional (per)fluoropolyether phosphates of structure (B) can be carried out by reacting the corresponding (per)fluoroalkylenoxides di-hydroxy-ended (B') with POCl₃. To obtain the derivative with m'= 0, it is necessary to use a molar ratio POCl₃/di-hydroxy-ended compound between 4/1 and 20/1, preferably between 12/1 and 16/1. The reaction is carried out by slowly dripping the hydroxy-ended compound in POCl₃, at a temperature in the range 50°C- 100°C, preferably 70°C-80°C, by eliminating the HCl vapours in a KOH trap. The POCl₃ excess is removed by distillation while the formed adduct is hydrolyzed by H₂O. The separation of product (B) with m'=0 takes place by extraction with a suitable organic solvent as, for example, ethyl acetate. The product is separated from the organic phase according to known techniques, for example by evaporation of the solvent.

To obtain the product of structure (B) with m'> 0, one proceeds as in case m'= 0, with the difference that, after the POCl₃ removal, the reaction adduct is further reacted with variable amounts of the di-hydroxy-ended compound. Then hydrolysis is carried out and the above procedure is performed.

Alternatively it is possible to prepare compounds (A) and (B), for example, by the reactions described in EP 1,225,178, by reacting compounds (A'), (B') with P₂O₅ according to the process described hereinafter. The alcohols (A'), (B') are additioned with an amount of water between 1% and 60% by moles with respect to the equivalents of the used alcohol, obtaining a mixture which is then reacted with phosphoric anhydride P₂O₅ additioned in amounts such as to obtain a ratio between the alcohol equivalents and the moles of phosphoric anhydride between 1.5:1 and 4:1, in a single portion or in more portions so as to maintain the temperature in the range 20°C-120°C; the product obtained from this phase is then hydrolyzed with water or with a diluted solution of hydrochloric acid and the organic phase is separated: from said organic phase product (A), (B) is then recovered.

Compounds (A'), (B') are known and can be prepared, for example, starting from the corresponding mono- or bi-functional perfluoropolyethers having -COF end groups obtained, for example, as described in USP 3,715,378, EP 148,482. They are transformed into the corresponding perfluoropolyethers (PFPE) having -COOR end groups by reaction with a ROH alcohol, according to USP 4,647,413; the obtained ester PFPEs are reacted with compounds of formula NHR'-(CH₂)_{q}-OH (if L = -CO-NR'-(CH₂)_{q}) according to USP 3,810,874; or by reacting said ester PFPEs with NaBH₄, as described in EP 1,114,842, and then with ethylene oxide.

The perfluoropolyethers having -COF end groups are known and can be prepared, for example, by tetrafluoroethylene photooxidation, optionally in the presence of hexafluoropropene, and subsequent decomposition of the peroxidic bonds according to USP 3,715,378, GB 1,104,482 and in USP 3,847,978.

It has furthermore been found by the Applicant that compounds (A) and/or (B) can be used in admixture with at least one of their precursors of formula:
(A') T-O-R_{f'}-CFY-L-OH,
(B') HO-L-YFC-O-R_{f}-CFY-L-OH,
wherein R_{f}, R_{f'} L, Y are as above.
The above mixture substantially show the same no dirt-pick up properties.

It has furthermore been found that also the precursors (A') and (B') are effective in the titanium surface protective treatment by conferring no dirt-pick up features (see the Examples).

It is therefore a further object of the present invention the use for the protective treatment (coating) of titanium surfaces of hydroxy perfluoropolyethers of formula:
(A') T-O-R_{f}, -CFY-L-OH,
(B') HO-L-YFC-O-R_{f}-CFY-L-OH,
or their mixtures, wherein R_{f}, R_{f'} L, Y are as above.

Said compounds (A') and (B') or their mixtures are preferably used in solvent-based compositions. As solvents it can be mentioned C₁-C₄ alcohols, preferably methanol, ethanol, isopropanol, more preferably isopropanol; fluorinated solvents, for example perfluoropolyethers, hydrofluoropolyethers, perfluorocarbons or hydrocarbon solvents.

Preferably the compositions comprise from 0.05% by weight to 5% by weight, more preferably from 0.1% by weight to 2% by weight of the compound (A') and/or (B').

The compositions of the present invention can besides contain additives, for example as viscosity modifiers, stabilizers, provided that they do not alter the titanium surface appearance.

One of the advantages of the water compositions of the present invention is that they are capable to wet the titanium surfaces without using surfactants. The latter, in fact, are generally removed with difficulty from surfaces.

The Applicant has furthermore unexpectedly and surprisingly found that compounds (A), (B), (A'), (B') and their mixtures confer to titanium surfaces easiness of stain removal of water, solvent and also of oils. They also impart antifingerprint and antigraffiti properties.

The treatment of the present invention is non toxic; specifically the compounds (A') and (B') do not give bioaccuemulation.

Furthermore compounds (A), (B), (A'), (B') and their mixtures confer to titanium surfaces also water-/oleo repellence properties.

The following Examples are given for illustrative but not limitative purposes of the invention.

### EXAMPLES

### Characterization

### - Determination of the m index

The m index represents the ratio of the milliequivalents (meq) determined by titration and the milliequivalents determined by NMR.

Compounds (A), (B) show a pH = 2 when in a completely acid form which corresponds to the case m = 2; compounds (A), (B) show a pH = 12 when in a completely salified form which corresponds to the case m = 0. When compounds (A), (B) show a pH between 4 and 9 then the m index is in the range 0-2, extremes excluded.

The pH of the compound is measured as follows.

1 g of compound of formula (A) or (B) is dispersed under stirring in a mixture water/methanol 1/1 (weight) and the pH is measured with a combined and calibrated electrode, at a temperature of 25°C. pH = 7.5-8 corresponds to m = 1.5.

### - Treatment of titanium surfaces

The non sandblasted and sandblasted sheets of titanium are cleaned by dipping in acetone and, after careful drying, are treated with one of the following methods:
a) treatment by dipping in a formulation by dip-coating at 5.26 mm/s rate, with a dipping time equal to 2 minutes;
b) spreading, by paper, or cloth, or cotton flock, or roll or brush, wet or soaked in a formulation.

After treatment with the compositions of the invention, the sheets are allowed to dry at room temperature for 10-20 minutes or, preferably, in a stove at 120°C for 3-5 minutes.

### - No Dirt Pick Up Test (NDPU Test)

To verify dirt-pick up property, an aggressive dirtying agent has been used formed of a mixture containing 10% by weight of coal and 90% by weight of maize oil Mazola^{®}. 3 successive dirtying cycles are carried out, as described hereinafter, visually evaluating after each cycle the dirtying degree:
- 1^{st} cycle: the mixture is left on the surface to be evaluated for 30 minutes, at room temperature; the mixture is mechanically removed with dry blotting paper, without using water or other solvents;
- 2^{nd} cycle: the mixture is left on the surface to be evaluated for 24 hours at room temperature; the mixture is mechanically removed with dry blotting paper, without using water or other solvents;
- 3^{rd} cycle: the mixture maintained at T = 50°C, is left on the surfaces to be evaluated, always at T = 50°C in a non ventilated stove, for 2 hours; the mixture is mechanically removed with dry blotting paper, without using water or other solvents.

| **Dirtying degree** | **Evaluation** |
|---|---|
| 1 | complete release |
| 2 | light halo |
| 3 | halo |
| 4 | partially persistent stain |
| 5 | no release |

The test is considered passed (positive) when the sheet has obtained a dirtying degree 1 or 2 at the end of the 3^{rd} cycle.

### - Water-repellence (WR) test

The water-repellence test is carried out, according to the ASTM D-5725-99 standards, by evaluating the static contact angle of milli-Q (Millipore) water drops deposited on the surfaces, by the DSA device (Krüss), at room temperature (20°C), before and after the thermal ageing cycles described hereinafter.

The test is considered passed (positive) for angle values equal to or higher than 85°, before the thermal ageing.

### - Oleorepellence (OR) test

The oleorepellence evaluation is carried out, according to the ASTM D-5725-99 standards, by evaluating the static contact angle of n-hexadecane or n-dodecane drops deposited on the surfaces, by the DSA device (Krüss), at room temperature (20°C), before and after the thermal ageing cycles described hereinafter. The test is considered passed (positive) for angle values equal to or higher than 45°, before the thermal ageing and after the ageing.

### - Easiness of stain release by means of antigraffiti test

The evaluation of said property has been carried out by using the antigraffiti test described hereinafter. The titanium surfaces treated with the compositions of the invention and the untreated ones have been written with a black indelible marking pen Pentel NN50 and after 72 hours, at room temperature, the writings have been removed with blotting paper and ethanol. Then one has proceeded with the visual examination of the sheets.

| **release degree** | **evaluation** |
|---|---|
| 1 | no release |
| 2 | partially persistent stain |
| 3 | halo |
| 4 | light halo |
| 5 | complete release |

The test is considered passed (positive) when the sheet has obtained a release degree equal to 4 or 5.

The titanium sheets, before being subjected to the above described tests, are treated as follows.

### - Thermal ageing cycles

Some untreated (control) sheets of titanium and those treated with the compositions of the invention have been subjected in a ventilated stove to successive thermal ageing cycles, each of 2 hour duration, at the temperatures of 100°C, 150°C, 200°C, 250°C.

### EXAMPLE 1

Six non sandblasted sheets of titanium were treated by dipping (method a)) and then allowed to dry in the air, with six compositions containing, in different percentages, a perfluoropolyether (PFPE) phosphate of formula (B) wherein m = 1.5, Z⁺ = NH₄⁺, L = -CH₂-(OCH₂CH₂)_{1,5}-, m'= 2, Y = F, R_{f} is the structure of class 1) with a number average molecular weight of 1,200 and a perfluoropolyether of formula (B'), wherein cui R_{f}, Y, L are as defined for the compound of for- mula (B) .
- treatment 1: water composition containing 0.1% by weight of the PFPE phosphate (B);
- treatment 2: water composition containing 1% by weight of the phosphate (B);
- treatment 3: water composition containing 3% by weight of the phosphate (B);
- treatment 4: water composition containing 5% by weight of the phosphate (B);
- treatment 5: water/isopropyl alcohol composition (67/33 ratio by weight) containing 1% by weight of the phosphate (B);
- treatment 6: composition in isopropyl alcohol containing 1% by weight of the perfluoroplyether of formula (B') having the same Y, R_{f}, L of the compound (B).

Said sheets were subjected to the water- and oleorepellence, NDPU and antigraffiti tests the results of them are reported in Tables 1-4 in comparison with a non sandblasted and untreated sheet of titanium (treatment 7) cleaned by dipping in acetone as described in the characterization. The angles of the sheets treated with the compositions of the invention are higher than 85° (for water-) and higher than 45° (for oleo-) and therefore said sheets pass said water- and oleo-repellence tests.

The sheet treated with the composition 2 and the sheet treated with the composition 6 were then further subjected to the antigraffiti and no-dirt pick up (NDPU) tests the results of them are reported in Tables 3 and 4 in comparison with a non sandblasted and untreated sheet of titanium (treatment 7) cleaned as described in the characterization.

The sheet 2 of the invention, even having a low oleorepellence value, passes the NDPU and antigraffiti tests.

It is to be noted that the sheet 6 treated with the composition containing the precursor (B'), even though it does not show a good water-repellence value, passes it too the oleo-repellence, NDPU and antigraffiti tests. This proves that the precursor (B') is capable to supply the same no dirt-pick up (NDPU) performances both with an oily base and a water/- solvent base (antigraffiti) of the compound (B) of the present invention.

**Table 1: Water-repellence test**

| **Treatment** | **Static contact angle with water (20°C)** |
|---|---|
| 1 | 86 ± 3° |
| 2 | 92 " |
| 3 | 98 " |
| 4 | 94 " |
| 5 | 93 " |
| 6 | 72 " |
| 7 (comp) | 77 " |

**Table 2: Oleorepellence test**

| **Treatment** | **Static contact angle with n-hexadecane (20°C)** |
|---|---|
| 1 | 52 ± 3° |
| 2 | 45 " |
| 3 | 71 " |
| 4 | 76 " |
| 5 | 62 " |
| 6 | 52 " |
| 7 (comp) | 34 " |

**Table 3: NDPU test**

| **Treatment** | **Evaluation after 1^{st} cycle** | **Evaluation after 2^{nd} cycle** | **Evaluation after 3^{rd} cycle** |
|---|---|---|---|
| 2 | 1 | 1 | 1 |
| 6 | 1 | 1 | 1 |
| 7 (comp) | 1 | 1/2 | 4 |

**Table 4: Antigraffiti test**

| **Treatment** | **Release degree** |
|---|---|
| 2 | 5 |
| 6 | 4 |
| 7 (comp) | 2 |

From the comparison of the data it results that the untreated titanium surfaces (treatment 7) retain any kind of dirt both having a solvent/water base (antigraffiti) and an oil base (NDPU) and said dirt is hardly removable: as a matter of fact the untreated sheet of titanium does not pass the antigraffiti and NDPU tests.

It is to be noted that the contact of the sheet of titanium with ethyl alcohol gives halos in the antigraffiti test.

It has been furthermore observed during the water-repellence test that the untreated titanium (sheet treatment 7) remains stained even due to mere water deposition and its removal with a dry cloth leaves an halo on said surface of metal, contrary to what happens for the stainless steel and copper.

### EXAMPLE 2

Four sandblasted sheets of titanium were treated with the following procedures:
- treatment 8: spreading, as above, of a water composition containing 5% by weight of the phosphate (B) of the Example 1 and subsequent drying in the air;
- treatment 9: spreading of a water composition containing 5% by weight of the phosphate (B) of the Example 1, subsequent washing with water and then drying in the air;
- treatment 10: dipping in a composition containing isopropyl alcohol and 0.1% by weight of the perfluoropolyether of formula (B') of the Example 1, and subsequent drying in the air;
- treatment 11: untreated sandblasted sheet (control).

The so treated sheets were subjected to the NDPU, WR, OR and antigraffiti tests the results of them are reported in the following Tables 5-8.

**Table 5: NDPU test (sandblasted sheets)**

| **Treatment** | **Evaluation after 1^{st} cycle** | **Evaluation after 2^{nd} cycle** | **Evaluation after 3^{rd} cycle** |
|---|---|---|---|
| 8 | 1 | 1 | 1 |
| 9 | 1 | 1 | 1 |
| 10 | 2 | 1 | 1 |
| 11 (comp) | 5 | 5 | 5 |

**Table 6: Water-repellence test after ageing**

| **Treatment** | **Static contact angle with water at ± 3°** | | | | |
|---|---|---|---|---|---|
| | **20°C** | **110°C** | **115°C** | **200°C** | **250°C** |
| 8 | 91 | 61 | 72 | 83 | 63 |
| 9 | 91 | 91 | 102 | 108 | 91 |
| 10 | 67 | n.d. | n.d. | n.d. | n.d. |
| 11 (comp) | 75 | 63 | 66 | 69 | 67 |

**Table 7: Oleo-repellence test after ageing**

| **Treatment** | **Static contact angle with n-dodecane ± 3°** | | | | |
|---|---|---|---|---|---|
| | **20°C** | **1100°C** | **150°C** | **200°C** | **50°C** |
| 8 | 55 | 24 | 14 | 28 | < 5 |
| 9 | 56 | 57 | 164 | 61 | 43 |
| 10 | 56 | n.d. | n.d. | n.d. | n.d. |
| 11 (comp) | < 5 | <5 | < 5 | 16 | < 5 |

**Table 8: Antigraffiti test**

| **Treatment** | **Release degree** |
|---|---|
| 8 | 5 |
| 9 | 5 |
| 10 | 5 |
| 11 (comp) | 1 |

From the comparison of the Table data it results that the compositions of the invention are effective in conferring a no dirt-pick up and a stain release even to previously sandblasted titanium surfaces.

### EXAMPLE 3 (comparative)

Two non sandblasted sheets of titanium were treated by dipping, as above, with two compositions according to patent application US 2002/0146576, comprising:
- 0.1% by weight of a perfluoropolyether silane of formula:

   W-L-YFC-O-R_{f}-CFY-L-W (formula A)

   wherein:
   R_{f} is a perfluoropolyether chain of structure 1) having a number average molecular weight of 1,200;
   Y = F; L = -CONH-; W = -Si(OC₂H₅)₃;
   or
- 0.1% by weight of a perfluoropolyether silane of formula:

   W-L-YFC-O-R_{f}-CFY-L-W (formula B)

   wherein L = -N(CH₃)- and Y, Rf, W have the above meanings;
- 95.9% by weight of isopropyl alcohol,
- 3% by weight of water,
- 1% by weight of HCl at 10%,
and then were dried in the air. The sheets were then subjected to the OR, WR, NDPU, antigraffiti tests, the results of them are reported in the Tables 9-12.

**Table 9: NDPU test (non sandblasted sheets)**

| **Formula** | **Evaluation after 1^{st} cycle** | **Evaluation after 2^{nd} cycle** | **Evaluation after 3^{rd} cycle** |
|---|---|---|---|
| A | 1/2 | 1/2 | 3 |
| B | 1/2 | 2/3 | 3 |

**Table 10: Water-repellence test**

| **Formula** | **Static contact angle with water** (20°C) |
|---|---|
| A | 99 ± 3° |
| B | 99 " |

**Table 11: Oleo-repellence test**

| **Formula** | **Static contact angle with n-hexadecane** (20°C) |
|---|---|
| A | 63 ± 3° |
| B | 60 " |

**Table 12: Antigraffiti test**

| **Formula** | **Release degree** |
|---|---|
| A | 4 |
| B | 2 |

From the comparison of the data of the Example 1 with the data of the Example 3 (comparative) it results that the compositions of the invention, even though they confer a water-repellence and oleo-repellence lower than those of the known silane compounds, are capable to confer, in particular at hot, the fluorinated compound content being equal, the no dirt-pick up to titanium surfaces.

Therefore known compounds capable to confer water-repellence and antilimestone properties to metals are not able to confer no dirt-pick up properties to titanium surfaces.

### EXAMPLE 4 (comparative)

The Example 3 (comparative) was repeated but by using two sandblasted sheets.

Then the sandblasted sheets were subjected to OR, WR, NDPU, antigraffiti tests, the results of them are reported in Tables 13-16.

**Table 13: NDPU test (sandblasted sheets)**

| **Formula** | **Evaluation after 1^{st} cycle** | **Evaluation after 2^{nd} cycle** | **Evaluation after 3^{rd} cycle** |
|---|---|---|---|
| A | 5 | 5 | 5 |
| B | 5 | 5 | 5 |

**Table 14: Water-repellence test**

| **Formula** | **Static contact angle with water** (20°C) |
|---|---|
| A | 99 ± 3° |
| B | 99 " |

**Table 15: Oleo-repellence test**

| **Formula** | **Static contact angle with n-hexadecan**e (20°C) |
|---|---|
| A | 63 ± 3° |
| B | 60 " |

**Table 16: Antigraffiti test**

| **Formula** | **Release degree** |
|---|---|
| A | 5 |
| B | 2 |

From the comparison of the data of the Example 2 with the data of the Example 4 (comparative) it results that the known compositions used for the surface antilimestone treatment of metals do not confer the no dirt-pick up to surfaces of titanium, also to previosuly sandblasted sheets.

### EXAMPLE 5 (comparative)

A non sandblasted sheet of titanium was treated by dipping and subsequent drying in the air, with a solvent-based composition (isopropyl alcohol) containing 1% by weight of a perfluoropolyether phosphate of formula (B) having the same L, m', Y, R_{f} of the phosphate (B) of the Example 1, but with the exception that m = 2 according to the teaching of patent application US 2002/0146576.

The so treated sheet was subjected to the NDPU, WR, OR and antigraffiti tests, the results of them are reported in the following Tables 17-20.

**Table 17: NDPU test**

| **Compound** | **Evaluation after 1^{st} cycle** | **Evaluation after 2^{nd} cycle** | **Evaluation after+ 3^{rd} cycle** |
|---|---|---|---|
| m = 2 | 5 | 5-4 | 3 |

**Table 18: Water-repellence test**

| **Formula** | **Static contact angle with water** (20°C) |
|---|---|
| m = 2 | 86 ± 3° |

**Table 19: Oleo-repellence test**

| **Formula** | **Static contact angle with n-hexadecane** (20°C) |
|---|---|
| m = 2 | 40 ± 8° |

**Table 20: Antigraffiti test**

| **Compound** | **Release degree** |
|---|---|
| m = 2 | 5 |

From the examination of the data it results that the sheet of titanium treated with the known compounds (m = 2) used for the antilimestone surface treatment of metals, even showing water-repellent and easiness of graffiti release properties, does not own no dirt-pick up properties.

Therefore compounds known to confer water-repellence and antilimestone properties to metals are unable to confer no dirt-pick up properties to surfaces of titanium.

### EXAMPLE 6 (comparative)

An untreated and non sandblasted sheet of titanium was dirtied with oil, marking pen and with oil mixed with coal. It was proceeded then to the washing of said sheet with a solution containing 1% of a detergent for dishes (Svelto), several rinses and drying.

The same oepration was repeated with a stainless steel sheet.

Then the two sheets were subjected to visual examination: the sheet of titanium shows halos in correspondence with the points wherein the dirtying agent was deposited while the stainless steel sheet shows a surface without halos and unaltered.

### EXAMPLE 7

The Example 1 was repeated by superficially treating two non sandblasted sheets of titanium with two compositions containing, in a different percentage, an ammonium salt of a phosphoric diester containing two perfluoroalkyl segments and a thioether bond, commecially known as Lodyne® P-208E (Ciba Specialties):
- treatment 12: water/isopropyl alcohol composition (67/33 ratio by weight) containing 1% by weight of the perfluoroalkyl phosphate;
- treatment 13: water/isopropyl alcohol composition (67/33 ratio by weight) containing 3% by weight of the perfluoroalkyl phosphate;

The sheets were then subjected to the water-, oleo-repellence, NDPU and antigraffiti tests, the results of them are reported in Tables 21-24.

**Table 21: Water-repellence test**

| **Treatment** | **Static contact angle with water** (20°C) |
|---|---|
| 12 | 90 ± 3.8° |
| 13 | 93 ± 4.4° |
| 7 (comp) | 77 ± 3.8° |

**Table 22: Oleo-repellence test**

| **Treatment** | **Static contact angle with n-hexadecane** (20°C) |
|---|---|
| 12 | 76.6 ± 3° |
| 13 | 59 ± 0.6° |
| 7 (comp) | 34 ± 3° |

**Table 23: NDPU test**

| **Treatment** | **Evaluation after** | **Evaluation after** | **Evaluation after** |
|---|---|---|---|
| | **1^{st} cycle** | **2^{nd} cycle** | **3^{rd} cycle** |
| 12 | 1 | 1 | 1 |
| 13 | 1 | 1 | 1 |
| 7 (comp) | 1 | 1/2 | 4 |

**Table 24: Antigraffiti test**

| **Treatment** | **Release degree** |
|---|---|
| 12 | 5 |
| 13 | 3 |
| 7 (comp) | 2 |

## Claims

1. Use for the protective treatment of metal titanium surfaces, to confer no dirt-pick up properties, of perfluoropolyethers of formula:
(A) T-O-[R_{f'}-CFY-L-O]P(O)(O⁻Z⁺)₂₋ₘ(OH)ₘ;
(B) (OH)ₘ(O⁻Z⁺)₂₋ₘP(O)(O-L-YFC-O-R_{f}-CFY-L-O-P(O)(O⁻Z⁺)]_{m'}--[O-L-YFC-O-R_{f}-CFY-L-O]P(O)(O⁻Z⁺)₂₋ₘ(OH)ₘ;
or of their mixtures,
wherein:
- m' is an integer from 0 to 20, preferably from 0 to 4;
- L is an organic group selected from -CH₂-(OCH₂CH₂)ₙ-, -CO-NR'-(CH₂)_{q}-, with R'= H or C₁-C₄ alkyl; n is a number from 0 to 8, preferably from 1 to 3, q is a number from 1 to 8, preferably from 1 to 3;
- Z⁺= alkaline metal ion or an aliphatic amine ion or a NR₄ group wherein R is selected from H, C₁-C₄ alkyl, C₁-C₄ hydroxyalkyl;
- Y = F, CF₃;
- m is a number between 0 and 2, extremes excluded, preferably between 0.5 and 1.5;
- T is a (per)fluoroalkyl group selected from -CF₃, -C₂F₅, -C₃F₇, -CF₂Cl, -C₂F₄Cl, -C₃F₆Cl, optionally one or two F atoms can be substituted with one or two H atoms, preferably one;
and wherein R_{f}, R_{f}, are selected from:
- a C₁-C₂₀ preferably C₂-C₆, (per) fluoroalkylene chain, optionally containing one or more ether, thioether, sulphonamido (SO₂NH), amido (CONH), amino (NH) bonds, preferably thioether bonds;
- a (per)fluoropolyoxyalkylene chain having a number average molecular weight in the range 350-8,000, preferably 500-3,000, formed of one or more of the following repeating units, statistically distributed along the chain:
(CFXO), (CF₂CF₂O), (CF₂CF₂CF₂O), (CF₂CF₂CF₂CF₂O), (CR₄R₅CF₂CF₂O), (CF(CF₃)CF₂O), (CF₂CF(CF₃)O), wherein X = F, CF₃; R₄ and R₅, equal to or different from each other, are selected from H, Cl, or perfluoroalkyl from 1 to 4 carbon atoms.

2. Use according to claim 1, wherein R_{f} and R_{f}, are perfluorooxy-alkylene chains comprising one of the following structures:
1) -(CF₂O)_{a'}-(CF₂CF₂O)_{b'} -
-with a'/b' between 0.5 and 2, extremes included (b' being different from 0), a' and b' being integers such as to give the above molecular weight;
2) -(C₃F₆O)ᵣ-(C₂F₄O)_{b}-(CFXO)ₜ-
with r/b = 0.5-2.0 (b being different from 0); (r+b)/t is in the range 10-30 (t being different from 0), b, r and t being integers such as to give the above molecular weight, X has the above meaning;
3) -(C₃F₆O)_{r'} - (CFXO)_{t'}-
t' can be 0; when t' is different from 0 then r'/t' = 10-30, r' and t' being integers such as to give the above molecular weight; X has the above meaning;
4) -(OCF₂CF(CF))_{z}-OCF₂(R'f)_{y}-CF₂O-(CF(CF))CF₂O)_{z}-
wherein y is 0 or 1, R'f is a fluoroalkylene group, preferably from 1 to 4 carbon atoms and z is an integer such that the molecular weight is the above one;
5) -(OCF₂CF₂CR₄R₅)_{q}-OCF₂(R' f)_{y}-CF₂O-(CR₄R₅CF₂CF₂O)ₛ- wherein:
R₄, R₅, R'f, y have the above meaning; q and s are integers such that the molecular weight is that above;
6) -(C₃F₆O)_{r"}(CFXO)_{t"}-OCF₂(R' f)_{y}-CF₂O(CF(CF₃)-CF₂O)_{r"}(CFXO-)_{t"}-
wherein r"/t"= 10-30 (t" being different from 0), r" and t" being integers such as to give the above molecular weight; R'f and y having the above meaning;
and wherein R_{f}, in formula (A) is preferably selected from 2) and 3):

3. Use according to claim 1, wherein compounds (A), (B) are used in water and/or solvent compositions, preferably water compositions.

4. Use according to claim 3, wherein the content of (A) and/or (B) is up to 35% by weight, preferably 30%.

5. Use according to claims 3-4, wherein the solvent is polar and is selected from glycols or C₁-C₄ alcohols, preferably methanol, ethanol, isopropanol, more preferably isopropanol; or the solvent is fluorinated and is selected from perfluoropolyethers, hydrofluoropolyethers, perfluorocarbons or hydrocarbon solvents.

6. Use according to claims 3-5, wherein the compositions comprise from 0.05% by weight to 10% by weight, more preferably from 0.1% by weight to 6% by weight of (A) and/or (B).

7. Use according to claims 1-6, wherein the composition is a water composition of compound (B), more preferably of compound (B) having m between 0.5 and 1.5.

8. Use for the protective treatment of titanium metal surfaces, to confer no dirt-pick up properties, of the compounds of claims 1-7 in admixture with at least one of the following compounds:
(A') T-O-R_{f}, -CFY-L-OH,
(B') HO-L-YFC-O-R_{f}-CFY-L-OH,
wherein R_{f}, R_{f'}, L, Y are as above.

9. Use for the protective treatment of titanium metal surfaces, for conferring no dirt-pick up properties, of the perfluoropolyethers (A') and/or (B') of claim 8.

10. Use according to claim 9, wherein (A'), (B') or their mixtures are in solvent-based compositions.

11. Use according to claim 10, wherein the solvent is selected from C₁-C₄ alcohols, preferably methanol, ethanol, isopropanol, more preferably isopropanol; or from fluorinated solvents, for example perfluoropolyethers, hydrofluoropolyethers, perfluorocarbons or hydrocarbon solvents.

12. Use according to claims 9-11, wherein the compositions comprise from 0.05% by weight to 5% by weight, more preferably from 0.1% by weight to 2% by weight of compound (A') and/or (B').

13. Use according to claims 1-12, wherein the compositions besides comprise additives, as for example viscosity modifiers, stabilizers, which do not alter the titanium surface appearance.

## Patentansprüche

1. Verwendung von Perfluorpolyethern der Formel :
(A) T-O-[R_{f}-CFY-L-O)P(O)(O⁻Z⁺)₂₋ₘ(OH)ₘ ;
(B) (OH)ₘ(O-Z⁺)₂₋ₘP(O)[O-L-YFC-O-R_{f}-CFY-L-O-P(O)(O⁻Z⁺)_{m'}-[O-L-YFC-O-R_{f}-CFY-L-O]P(O)(O⁻Z⁺)₂₋ₘ(OH)ₘ ;
oder Gemischen davon für die schützende Behandlung von Titanmetalloberflächen zur Verleihung von Anschmutzungsresistenzeigenschaften,
wobei :
- m' für eine ganze Zahl von 0 bis 20, vorzugsweise von 0 bis 4, steht ;
- L für eine organische Gruppe steht, die aus -CH₂-(OCH₂CH₂)ₙ- und -CO-NR'-(CH₂)_{q}- ausgewählt ist, wobei R' = H oder C₁-C₄-Alkyl ; n für eine Zahl von 0 bis 8, vorzugsweise 1 bis 3, steht, q für eine Zahl von 1 bis 8, vorzugsweise 1 bis 3, steht ;
- Z⁺ = Alkalimetallion oder Ion eines aliphatischen Amins oder eine NR₄-Gruppe, wobei R aus H, C₁-C₄-Alkyl und C₁-C₄-Hydroxyalkyl ausgewählt ist ;
- Y = F, CF₃ ;
- m für eine Zahl zwischen 0 und 2 ausschließlich der Extrema, vorzugsweise zwischen 0,5 und 1,5, steht ;
- T für eine (Per)fluoralkylgruppe, die unter -CF₃, -C₂F₅, -C₃F₇, -CF₂Cl, - C₂F₄Cl, -C₃F₆Cl, wobei gegebenenfalls ein oder zwei F-Atome durch ein oder zwei H-Atome, vorzugsweise ein H-Atom, ersetzt sein können, ausgewählt ist, steht ;
und wobei R_{f} und R_{f'} ausgewählt sind aus :
- einer C₁-C₂₀-(Per)fluoroxyalkylenkette, vorzugsweise C₂-C₆-(Per)fluoroxyalkylenkette, die gegebenenfalls eine oder mehrere Ether-, Thioether-, Sulfonamido- (SO₂NH-), Amido- (CONH-), Amino-(NH-)Bindungen, vorzugsweise Thioetherbindungen, enthält ;
- einer (Per)fluorpolyoxyalkylenkette mit einem zahlenmittleren Molekulargewicht im Bereich von 350-8.000, vorzugsweise 500-3.000, aus einer oder mehreren der folgenden Wiederholungseinheiten, die statistisch entlang der Kette verteilt sind :
(CFXO), (CF₂CF₂O), (CF₂CF₂CF₂O) (CF₂CF₂CF₂CF₂O), (CR₄R₅CF₂CF₂O), (CF(CF₃)CF₂O), (CF₂CF(CF₃)O), wobei X = F, CF₃ ; R₄ und R₅ gleich oder voneinander verschieden sind und aus H, Cl oder Perfluoralkyl mit 1 bis 4 Kohlenstoffatomen ausgewählt sind.

2. Verwendung nach Anspruch 1, wobei R_{f} und R_{f'} für Perfluoroxyalkylenketten stehen, die eine der folgenden Strukturen umfassen :
1) -(CF₂O)_{a'}-(CF₂CF₂O)_{b'}-
wobei a'/b' zwischen 0,5 und 2 einschließlich der Extrema liegt (wobei b' von 0 verschieden ist), wobei a' und b' für solche ganze Zahlen stehen, dass sich das obige Molekulargewicht ergibt;
2) -(C₃F₆O)ᵣ(C₂F₄O)_{b}-(CFXO)ₜ-
wobei r/b = 0,5-2,0 (wobei b von 0 verschieden ist), (r+b)/t im Bereich von 10-30 liegt(wobei t von 0 verschieden ist), wobei b, r und t für solche ganze Zahlen stehen, dass sich das obige Molekulargewicht ergibt, und X wie oben definiert ist ;
3) -(C₃F₆O)_{r'}-(CFXO)_{t'}-
wobei t' 0 sein kann ; wenn t' von 0 verschieden ist, dann r'/t' = 10-30, r' und t' für solche ganze Zahlen stehen, dass sich das obige Molekulargewicht ergibt ; X die oben angegebene Bedeutung besitzt ;
4) -(OCF₂CF(CF₃))_{z}-OCF₂(R'f)_{y}-CF₂O-(CF(CF₃)CF₂O)₂-
wobei y für 0 oder 1 steht, R'f für eine Fluoralkylengruppe, die vorzugsweise 1 bis 4 Kohlenstoffatome aufweist, steht und z für eine solche ganze Zahl steht, dass sich das obige Molekulargewicht ergibt ;
5) -(OCF₂CF_{Z}CR₄R₅)_{q}-OCF₂(R'f)_{y}-CF₂O-(CR₄R₅CF₂CF₂O)ₛ-
wobei :
R₄, R₅, R'f und y die oben angegebene Bedeutung besitzen und q und s für solche ganze Zahlen stehen, dass sich das obige Molekulargewicht ergibt ;
6) -(C₃F₆O)_{r"}-(CFXO)_{t"}-OCF₂(R'f)_{y}-CF₂O(CF(CF₃)CF₂O)_{r"}(CFXO)_{t"}-
wobei r"/t" = 10-30 (wobei t" von 0 verschieden ist),
wobei r" und t" für solche ganze Zahlen stehen, dass sich das obige Molekulargewicht ergibt und R'f und y die oben angegebene Bedeutung besitzen ;
und wobei R_{f'} in Formel (A) vorzugsweise aus 2) und 3) ausgewählt ist.

3. Verwendung nach Anspruch 1, wobei die Verbindungen (A) und (B) in Wasser- und/oder Lösungsmittelzusammensetzungen, vorzugsweise Wasserzusammensetzungen, verwendet werden.

4. Verwendung nach Anspruch 3, wobei der Gehalt von (A) und/oder (B) bis zu 35 Gew.- %, vorzugsweise 30 Gew.- %, beträgt.

5. Verwendung nach den Ansprüchen 3-4, wobei das Lösungsmittel polar ist und aus Glykolen oder C₁-C₄-Alkoholen, vorzugsweise Methanol, Ethanol, Isopropanol, weiter bevorzugt Isopropanol, ausgewählt ist oder das Lösungsmittel fluoriert ist und aus Perfluorpolyethern, Hydrofluorpolyethern, Perfluorkohlenwasserstoffen oder Kohlenwasserstoff-Lösungsmitteln ausgewählt ist.

6. Verwendung nach den Ansprüchen 3-5, wobei die Zusammensetzungen 0,05 Gew.- % bis 10 Gew.- %, weiter bevorzugt 0,1 Gew.- % bis 6 Gew.- %, (A) und/oder (B) umfassen.

7. Verwendung nach den Ansprüchen 1-6, wobei es sich bei der Zusammensetzung um eine Wasserzusammensetzung von Verbindung (B), weiter bevorzugt von Verbindung (B) mit m zwischen 0,5 und 1,5, handelt.

8. Verwendung der Verbindungen der Ansprüche 1-7 in Abmischung mit mindestens einer der folgenden Verbindungen für die schützende Behandlung von Titanmetalloberflächen zur Verleihung von Anschmutzungsresistenzeigenschaften :
(A') T-O-R_{f'}-CFY-L-OH
(B') HO-L-YFC-O-R_{f}-CFY-L-OH,
wobei R_{f}, R_{f'}, L und Y die oben angegebene Bedeutung besitzen.

9. Verwendung der Perfluorpolyether (A') und (B') von Anspruch 8 für die schützende Behandlung von Titanmetalloberflächen zur Verleihung von Anschmutzungsresistenzeigenschaften.

10. Verwendung nach Anspruch 9, wobei (A'), (B') oder Gemische davon in lösungsmittelbasierten Zusammensetzungen verwendet werden.

11. Verwendung nach Anspruch 10, wobei das Lösungsmittel aus C₁-C₄-Alkoholen, vorzugsweise Methanol, Ethanol, Isopropanol, weiter bevorzugt Isopropanol, oder aus fluorierten Lösungsmitteln, beispielsweise Perfluorpolyethern, Hydrofluorpolyethern, Perfluorkohlenwasserstoffen oder Kohlenwasserstoff-Lösungsmitteln, ausgewählt ist.

12. Verwendung nach den Ansprüchen 9-11, wobei die Zusammensetzungen 0,05 Gew.- % bis 5 Gew.- %, weiter bevorzugt 0,1 Gew.- % bis 2 Gew.- %, Verbindung (A') und/oder (B') umfassen.

13. Verwendung nach den Ansprüchen 1-12, wobei die Zusammensetzungen außerdem Additive, wie beispielsweise Viskositätsmodifikatoren und Stabilisatoren, die das Aussehen der Titanoberfläche nicht verändern, umfassen.

## Revendications

1. Utilisation, pour le traitement protecteur de surfaces de titane métallique, en vue de conférer des propriétés anti-salissures, de perfluoropolyéthers de formule :
(A) T-O-[R_{f'}-CFY-L-O]P(O)(O⁻Z⁺)₂₋ₘ(OH)ₘ ;
(B) (OH)ₘ(O⁻Z⁺)₂₋ₘP(O)[O-L-YFC-O-R_{f}-CFY-L-O-P(O)(O⁻Z⁺)]_{m'}-[O-L-YFC-O-R_{f}-CFY-L-O]P(O)(O⁻Z⁺)₂₋ₘ(OH)ₘ ;
ou de leurs mélanges,
dans lesquels :
- m' est un entier valant de 0 à 20, de préférence de 0 à 4 ;
- L est un groupe organique choisi parmi -CH₂-(OCH₂CH₂)ₙ- et -CO-NR'-(CH₂)_{q}- avec R' = H ou alkyle en C₁-C₄, n étant un nombre valant de 0 à 8, de préférence de 1 à 3, et q étant un nombre valant de 1 à 8, de préférence de 1 à 3 ;
- Z⁺ = ion de métal alcalin ou ion d'une amine aliphatique ou groupe NR₄ dans lequel R est choisi parmi H, un alkyle en C₁-C₄ et un hydroxyalkyle en C₁-C₄;
- Y = F ou CF₃ ;
- m est un nombre entre 0 et 2, extrêmes exclus, de préférence entre 0,5 et 1,5 ;
- T est un groupe (per)fluoroalkyle choisi parmi -CF₃, -C₂F₅, -C₃F₇, -CF₂Cl, -C₂F₄Cl et -C₃F₆Cl, un ou deux atomes F pouvant éventuellement être substitués par un ou plusieurs atomes H, de préférence un seul ;
et dans lesquels R_{f} et R_{f'} sont choisis parmi :
- une chaîne (per)fluoroalkylène en C₁-C₂₀, de préférence C₂-C₆, contenant éventuellement une ou plusieurs liaisons éther, thioéther, sulfonamido (SO₂NH), amido (CONH) ou amino (NH), de préférence des liaisons thioéther ; et
- une chaîne (per)fluoropolyoxyalkylène ayant un poids moléculaire moyen en nombre dans la gamme de 350-8000, de préférence 500-3000, constituée d'un ou plusieurs des motifs répétitifs suivants, distribués statistiquement le long de la chaîne : (CFXO), (CF₂CF₂O), (CF₂CF₂CF₂O), (CF₂CF₂CF₂CF₂O), (CR₄R₅CF₂CF₂O), (CF(CF₃)CF₂O), (CF₂CF(CF₃)O), dans lesquels X = F ou CF₃, et R₄ et R₅, égaux ou différents l'un de l'autre, sont choisis parmi H, Cl et un perfluoroalkyle de 1 à 4 atomes de carbone.

2. Utilisation selon la revendication 1, dans laquelle R_{f} et R_{f'} sont des chaînes perfluorooxyalkylène comprenant l'une des structures suivantes :
1) -(CF₂O)_{a'}-(CF₂CF₂O)_{b'}-
avec a'/b' entre 0,5 et 2, extrêmes inclus (b' étant différent de 0), a' et b' étant des entiers permettant d'obtenir le poids moléculaire précité ;
2) -(C₃F₆O)ᵣ-(C₂F₄O)_{b}-(CFXO)ₜ-
avec r/b = 0,5-2,0 (b étant différent de 0) ; (r+b)/t se situe dans la gamme 10-30 (t étant différent de 0), b, r et t étant des entiers permettant d'obtenir le poids moléculaire précité ; et X a la signification ci-dessus ;
3) -(C₃F₆O)_{r'}-(CFXO)ₜ-
t' peut valoir 0 ; si t' est différent de 0, alors r'/t' = 10-30, r' et t' étant des entiers permettant d'obtenir le poids moléculaire précité ; et X a la signification ci-dessus ;
4) -(OCF₂CF(CF₃))_{z}-OCF₂(R'f)_{y}-CF₂O-(CF(CF₃)CF₂O)_{z}-
dans laquelle y vaut 0 ou 1, R'f est un groupe fluoroalkylène, de préférence de 1 à 4 atomes de carbone, et z est un entier tel que le poids moléculaire est celui précité ;
5) -(OCF₂CF₂CR₄R₅)_{q}-OCF₂(R'f)_{y}-CF₂O-(CR₄R₅CF₂CF₂O)ₛ-
dans laquelle R₄, R₅, R'f et y ont la signification ci-dessus ; et q et s sont des entiers tels que le poids moléculaire est celui précité ;
6) -(C₃F₆O)_{r"}-(CFXO)ₜ-OCF₂(R'f)_{y}-CF₂O(CF(CF₃)-CF₂O)_{r"}-(CFXO)ₜ-
dans laquelle r"/t" = 10-30 (t" étant différent de 0), r" et t" étant des entiers permettant d'obtenir le poids moléculaire précité, R'f et y ayant la signification ci-dessus ;
et dans laquelle R_{f'} dans la formule (A) est de préférence choisi parmi 2) et 3).

3. Utilisation selon la revendication 1, dans laquelle les composants (A) et (B) sont utilisés dans des compositions aqueuses et/ou à base de solvant, de préférence des compositions aqueuses.

4. Utilisation selon la revendication 3, dans laquelle la teneur de (A) et/ou (B) va jusqu'à 35 % en poids, de préférence 30 %.

5. Utilisation selon les revendications 3 et 4, dans laquelle le solvant est polaire et est choisi parmi les glycols ou les alcools en C₁-C₄, de préférence le méthanol, l'éthanol et l'isopropranol, mieux l'isopropranol ; ou le solvant est fluoré et est choisi parmi les perfluoropolyéthers, les hydrofluoropolyéthers, les hydrocarbures perfluorés et les solvants hydrocarbonés.

6. Utilisation selon les revendications 3 à 5, dans laquelle les compositions comprennent de 0,05 % en poids à 10 % en poids, mieux de 0,1 % en poids à 6 % en poids de (A) et/ou (B).

7. Utilisation selon les revendications 1 à 6, dans laquelle la composition est une composition aqueuse de composé (B), mieux de composé (B) ayant un m entre 0,5 et 1,5.

8. Utilisation, pour le traitement protecteur de surfaces de titane métallique, en vue de conférer des propriétés anti-salissures, des composés des revendications 1 à 7 mélangés avec l'un au moins des composés suivants :
(A') T-O-R_{f'}-CFY-L-OH,
(B') HO-L-YFC-O-R_{f}-CFY-L-OH,
dans lesquels R_{f}, R_{f'}, L et Y sont tels que ci-dessus.

9. Utilisation, pour le traitement protecteur de surfaces de titane métallique, en vue de conférer des propriétés anti-salissures, des perfluoropolyéthers (A') et/ou (B') de la revendication 8.

10. Utilisation selon la revendication 9, dans laquelle (A'), (B') ou leurs mélanges sont des compositions à base de solvant.

11. Utilisation selon la revendication 10, dans laquelle le solvant est choisi parmi les alcools en C₁-C₄, de préférence le méthanol, l'éthanol et l'isopropranol, mieux l'isopropranol ; ou parmi les solvants fluorés, par exemple les perfluoropolyéthers, les hydrofluoropolyéthers, les hydrocarbures perfluorés et les solvants hydrocarbonés.

12. Utilisation selon les revendications 9 à 11, dans laquelle les compositions comprennent de 0,05 % en poids à 5 % en poids, mieux de 0,1 % en poids à 2 % en poids de composé (A') et/ou (B').

13. Utilisation selon les revendications 1 à 12, dans laquelle les compositions comprennent également des additifs, par exemple des agents modifiant la viscosité ou des stabilisants, qui ne modifient pas l'apparence de surface du titane.
